# NOUVEAU FASCICULE DE BREVET EUROPEEN

(11) **EP 2 396 566 B2**
(45) Date de publication et mention de la décision concernant l'opposition: **04.11.2020**
(45) Mention de la délivrance du brevet: 16.07.2014
(21) Numéro de dépôt: 09803825.0
(22) Date de dépôt: 09.12.2009
(51) Int. Cl.: F16F 15/131

(54) **DOUBLE VOLANT AMORTISSEUR A LIMITEUR DE BASCULEMENT**
ZWEIMASSEN-SCHWUNGRAD MIT EINEM NEIGUNGSBEGRENZER
DUAL MASS FLYWHEEL WITH A TILT LIMITER

(30) Priorité: 12.02.2009 FR 0950900
(43) Date de publication de la demande: 21.12.2011
(73) Titulaire: Valeo Embrayages, 80009 Amiens Cedex 2 (FR)
(72) Inventeur: DEQUESNES, Laurent, F-80800 Fouilloy (FR); DE VITA, Rodolfo, F-93012 Bobigny (FR)
(74) Mandataire: Vincent, Catherine Marie Marguerite
(86) Numéro de dépôt international: PCT/FR2009/052462
(87) Numéro de publication internationale: WO 2010/092244

(56) Documents cités:
- WO-A-2008/046379
- WO-A1-2007/048372
- DE-A1- 3 721 712
- DE-A1- 4 332 465
- DE-A1- 10 136 568
- DE-A1-102005 037 514
- DE-U1-202008 006 078
- FR-A- 2 812 701
- FR-A1- 2 885 194
- FR-A1- 2 918 727

## Description

L'invention concerne un double volant amortisseur, en particulier pour véhicule automobile, comprenant deux masses d'inertie coaxiales dont la première est destinée à être fixée en bout d'un arbre menant tel que le vilebrequin d'un moteur à combustion interne et dont la seconde est centrée et guidée en rotation sur la première et est reliée par un embrayage à un arbre mené, tel qu'un arbre d'entrée d'une boîte de vitesses.

Un amortisseur de torsion est monté entre les deux masses d'inertie et comprend des moyens élastiquement déformables, tels que des ressorts à disposition circonférentielle, qui permettent d'absorber les vibrations et acyclismes de rotation générés par le moteur du véhicule. Des moyens de frottement montés entre les deux masses d'inertie permettent d'amortir les vibrations et acyclismes absorbés par les ressorts, en freinant les oscillations relatives des deux masses d'inertie.

Les ressorts de l'amortisseur de torsion sont logés dans une chambre annulaire délimitée par la première masse d'inertie et par un couvercle fixé sur cette première masse d'inertie. L'élément de sortie de l'amortisseur de torsion est un voile annulaire fixé sur la seconde masse d'inertie et qui s'étend dans la chambre annulaire pour former un appui de premières extrémités des ressorts de l'amortisseur de torsion, dont les secondes extrémités sont en appui sur des parties en saillie de la première masse d'inertie et du couvercle annulaire.

Il est connu de former une nervure annulaire sur le couvercle en regard de la périphérie du voile annulaire, pour limiter le basculement axial de la seconde masse d'inertie dû à sa flexion en fonctionnement. Cette limitation du basculement se traduit par un choc métal sur métal, qui est bruyant et qui est supporté notamment par les paliers du double volant amortisseur, au détriment de la durée de vie de ces paliers.

L'invention a notamment pour but d'apporter une solution simple, efficace et économique à ces problèmes.

Elle propose à cet effet un double volant amortisseur, en particulier pour véhicule automobile, comprenant deux masses d'inertie coaxiales, un amortisseur de torsion monté entre les deux masses d'inertie et comprenant des ressorts et des moyens de frottement pour l'absorption et l'amortissement des vibrations et acyclismes de rotation, caractérisé en ce que les moyens de frottement comprennent au moins une rondelle élastique et une rondelle de frottement serrées entre un couvercle annulaire solidaire de la première masse d'inertie et la périphérie radialement externe d'un voile annulaire solidaire de la seconde masse d'inertie et formant un élément de sortie de l'amortisseur de torsion, la rondelle élastique précitée formant également un moyen d'amortissement du basculement axial ou de la flexion de la seconde masse d'inertie en fonctionnement.

Ainsi, selon l'invention, le basculement axial de la seconde masse d'inertie, qui résulte de sa flexion en fonctionnement, est amorti par la rondelle élastique qui fait partie des moyens de frottement de l'amortisseur de torsion. Les chocs qui peuvent résulter de la limitation du basculement de la seconde masse d'inertie sont moins bruyants et moins violents que dans la technique antérieure et la durée de vie des paliers est augmentée.

Selon une autre caractéristique de l'invention, la limitation du basculement axial de la seconde masse d'inertie est réalisée par appui de la rondelle de frottement précitée sur le voile annulaire ou sur le couvercle annulaire.

Comme cette rondelle de frottement est en général réalisée en matériau plastique, le choc qui limite le basculement axial de la seconde masse d'inertie en fonctionnement est un choc métal sur matériau plastique qui est beaucoup moins bruyant que dans la technique antérieure.

Selon encore une autre caractéristique de l'invention, la rondelle de frottement précitée comporte, sur sa face tournée vers le voile annulaire ou vers le couvercle annulaire, une surépaisseur annulaire formant une butée de limitation du basculement axial de la seconde masse d'inertie.

Cette surépaisseur annulaire permet de contrôler la course de basculement axial de la seconde masse d'inertie.

Selon encore d'autres caractéristiques de l'invention, les moyens de frottement comprennent également une rondelle d'appui, intercalée entre la rondelle élastique et la rondelle de frottement, cette rondelle élastique et la rondelle d'appui étant centrées sur des pions en saillie du voile annulaire ou étant solidaires en rotation du voile annulaire ou de la rondelle de frottement.

Avantageusement, la rondelle de frottement, la rondelle d'appui et la rondelle élastique forment un sous-ensemble dans lequel la rondelle d'appui et la rondelle élastique sont retenues sur la rondelle de frottement par des crochets formés sur la rondelle de frottement, ces crochets étant engagés dans des découpes ou des échancrures de l'élément qui porte le sous-ensemble, cet élément étant formé par le voile annulaire ou par le couvercle annulaire précité.

Dans un mode particulier de réalisation de l'invention, la rondelle de frottement est appliquée et fixée sur le voile annulaire et la rondelle élastique est en appui sur le couvercle, directement ou par l'intermédiaire d'une autre rondelle de frottement.

Dans une variante de réalisation, la rondelle de frottement est appliquée et fixée sur le couvercle et la rondelle élastique est en appui sur le voile annulaire, directement ou par l'intermédiaire d'une autre rondelle de frottement.

Dans ces deux modes de réalisation, la rondelle élastique peut être accrochée sur la première rondelle de frottement et forme un sous-ensemble avec celle-ci.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe axiale d'un double volant amortisseur de la technique antérieure ;
- les figures 2 et 3 sont des vues schématiques partielles en coupe axiale d'un premier mode de réalisation de l'invention ;
- la figure 4 est une vue schématique en perspective éclatée de ce mode de réalisation de l'invention ;
- la figure 5 est une vue schématique en perspective éclatée d'une variante de réalisation de l'invention ;
- la figure 6 est une vue semblable aux figures 2 et 3, pour cette variante de réalisation de l'invention ;
- les figures 7 et 8 sont deux vues schématiques partielles en coupe axiale représentant deux autres variantes de réalisation de l'invention.

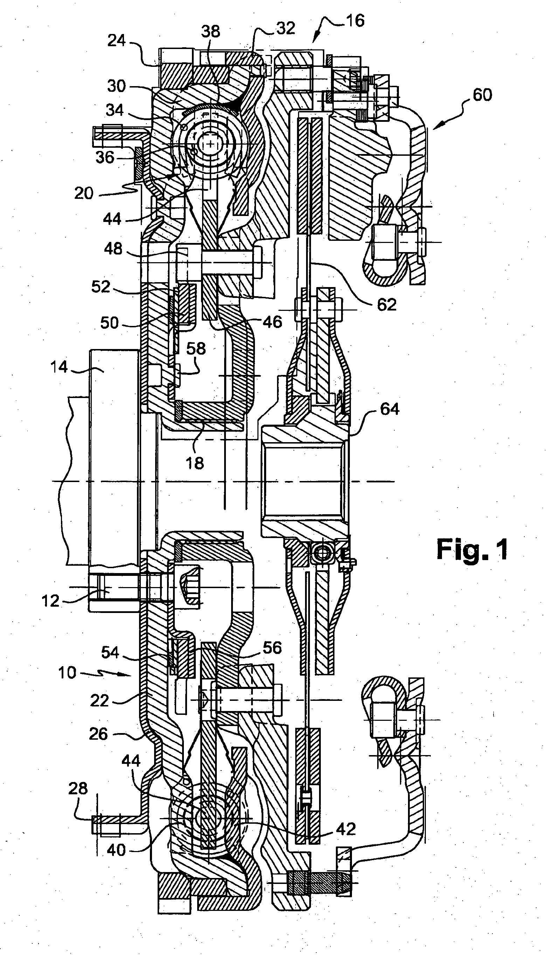

On se réfère d'abord à la figure 1, qui représente schématiquement un double volant amortisseur décrit dans le document FR-2885194-A1, comprenant essentiellement une première masse d'inertie 10, destinée à être fixée par des vis 12 sur l'extrémité du vilebrequin 14 d'un moteur à combustion interne, une seconde masse d'inertie 16 centrée et guidée en rotation sur la première masse d'inertie 10 au moyen d'un palier 18, et un amortisseur de torsion 20 qui est monté entre les deux masses d'inertie et qui les relie en rotation pour la transmission d'un couple de rotation avec absorption et amortissement des vibrations et des acyclismes de rotation générés par le moteur à combustion interne et transmis par le vilebrequin 14.

La première masse d'inertie 10 comprend une tôle annulaire 22 emboutie et portant à sa périphérie externe une couronne dentée de démarreur 24, et une tôle annulaire mince 26 fixée à la tôle annulaire 22 du côté du vilebrequin par les vis 12 et par des rivets extrudés et comportant un rebord circonférentiel externe 28 formé avec des bossages destinés à être détectés par un capteur.

La tôle annulaire 22 comporte un rebord périphérique extérieur 30 de forme cylindrique, orienté vers la masse d'inertie 16 et délimitant une chambre annulaire de logement et de guidage des ressorts de l'amortisseur de torsion 20, cette chambre étant fermée axialement du côté de la seconde masse d'inertie par un couvercle annulaire 32 fixé sur le rebord périphérique 30 de la tôle annulaire 22 et s'étendant radialement vers l'intérieur.

L'amortisseur de torsion 20 comprend des ressorts hélicoïdaux coaxiaux 34, 36 qui s'étendent circonférentiellement et qui sont guidés dans la chambre annulaire précitée par des goulottes 38 formées par des tôles cintrées sur lesquelles s'appuient les parties radialement externes des ressorts extérieurs 34.

Les ressorts extérieurs 34 de l'amortisseur de torsion sont en appui à leurs extrémités sur des bossages 40 et 42 des parois latérales de la chambre annulaire, c'est-à-dire de la tôle annulaire 22 et du couvercle annulaire 32, et sur des pattes radiales 44 d'un voile annulaire 46 fixé par des rivets 48 à la seconde masse d'inertie 16. Les pattes radiales 44 du voile s'étendent entre les extrémités des ressorts 34 de l'amortisseur de torsion, diamétralement par rapport à ces extrémités.

Les têtes des rivets 48 servent à l'entraînement en rotation d'une rondelle de frottement 50 qui est serrée entre une rondelle d'application 52 sollicitée axialement par une rondelle élastique 54 et une plaque annulaire 56 qui est fixée sur la tôle annulaire 22 de la première masse d'inertie par les vis 12 et par des rivets extrudés 58. L'énergie des oscillations relatives des deux masses d'inertie est dissipée par les frottements de la rondelle 50 serrée entre la rondelle d'application 52 et la plaque annulaire 56.

La seconde masse d'inertie 16 forme un plateau de réaction d'un embrayage 60 comprenant un disque de friction 62 relié par un moyeu 64 à surface interne cannelée à un arbre de transmission, non représenté, tel que l'arbre d'entrée d'une boîte de vitesses.

En fonctionnement, la seconde masse d'inertie 16 subit des flexions qui se traduisent par un basculement axial de cette seconde masse d'inertie et du voile annulaire 46 qui en est solidaire, ce basculement axial pouvant être limité par une nervure annulaire formée en saillie sur le couvercle annulaire 42 du côté du voile annulaire 46, à hauteur de la périphérie externe de ce voile annulaire. Toutefois, il en résulte des chocs métal sur métal qui sont bruyants et qui limitent la durée de vie des paliers du double volant amortisseur et en particulier du palier 18 de centrage et de guidage en rotation de la seconde masse d'inertie 16 sur la première masse d'inertie 10.

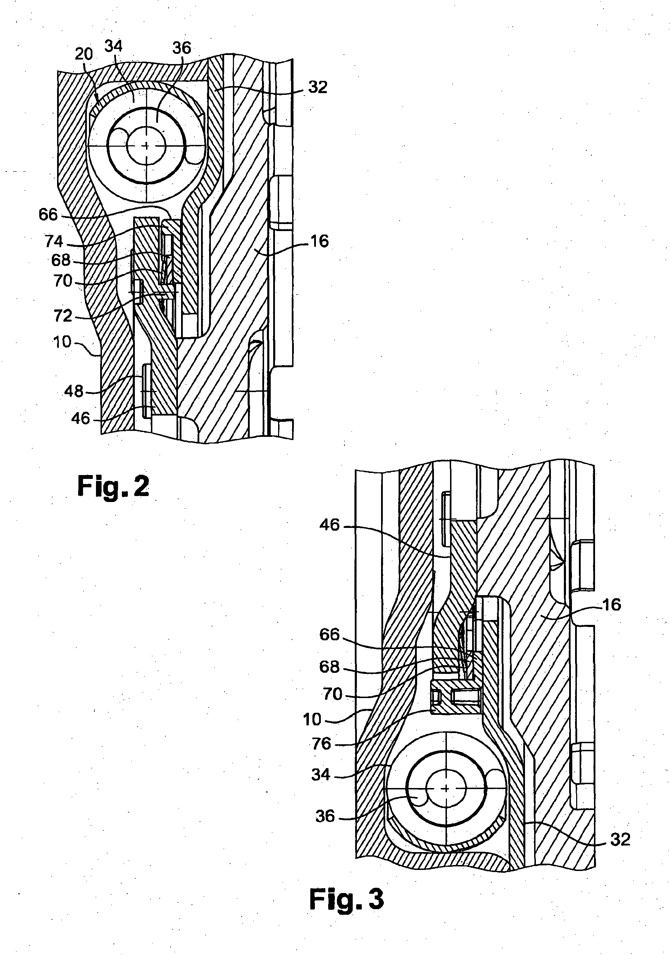

La présente invention dont un premier mode de réalisation est représenté schématiquement aux figures 2 à 4, permet de pallier ces inconvénients.

On retrouve en figure 2 les composants essentiels du double volant amortisseur de la figure 1, à savoir une première masse d'inertie 10, une seconde masse d'inertie 16, un amortisseur de torsion monté entre les deux masses d'inertie et comprenant des ressorts 34, 36 à disposition circonférentielle montés dans une chambre annulaire délimitée par la première masse d'inertie 10 et par un couvercle annulaire 32 fixé sur cette première masse d'inertie, et un voile annulaire 46 fixé par des rivets 48 sur la seconde masse d'inertie 16 pour former l'élément de sortie de l'amortisseur de torsion 20.

Selon l'invention, des moyens de frottement destinés à amortir les vibrations et acyclismes de rotation sont montés entre la périphérie radialement externe du voile annulaire 46 et la partie radialement interne du couvercle annulaire 32, ces moyens de frottement comprenant une rondelle de frottement 66 appliquée sur le couvercle annulaire 32, une rondelle d'appui 68 appliquée sur la rondelle de frottement 66, du côté du voile annulaire 46 et une rondelle élastique 70 qui prend appui sur le voile annulaire 46 et sur la rondelle d'appui 68 et qui sollicite axialement la rondelle de frottement 66 en appui sur le couvercle annulaire 32.

La rondelle d'appui 68 et la rondelle élastique 70 sont centrées et immobilisées en rotation sur le voile annulaire 46 au moyen de pions extrudés 72 de ce voile, qui s'étendent en saillie parallèlement à l'axe de rotation en direction du couvercle annulaire 32.

La périphérie radialement externe de la rondelle de frottement 66 comporte un rebord annulaire 74 qui forme une saillie du côté du voile annulaire 46 et qui est destiné à s'appliquer sur la périphérie radialement externe du voile annulaire 46 pour limiter le basculement axial de la seconde masse d'inertie 16 en fonctionnement. Ce basculement axial est en outre amorti par la rondelle élastique 70. Comme la rondelle de frottement 74 est en général réalisée en matériau plastique, les chocs de son rebord annulaire 74 sur le voile annulaire 46 sont moins bruyants et moins violents que dans la technique antérieure.

En outre, le basculement axial de la seconde masse d'inertie 16 limité par le rebord annulaire 74 de la rondelle 66 fatigue moins les paliers que dans la technique antérieure.

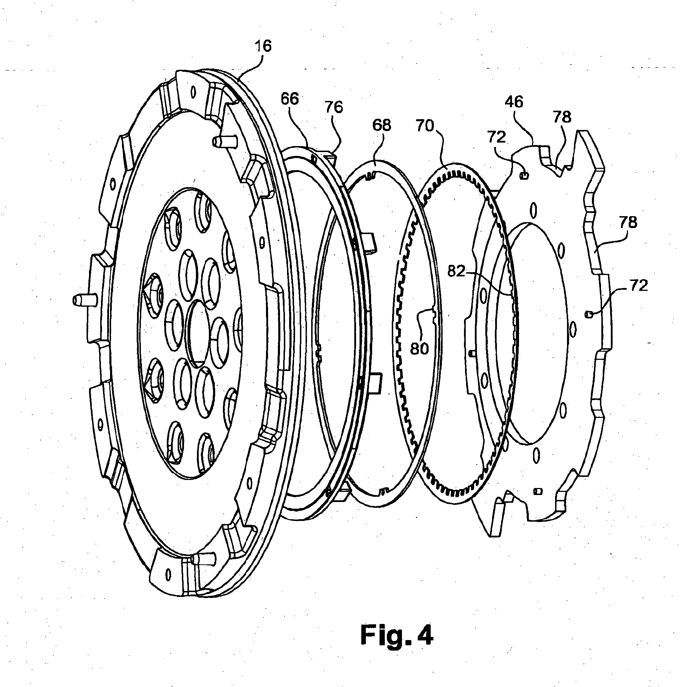

Comme on peut le voir sur les figures 3 et 4, la rondelle de frottement 66 comporte à sa périphérie radialement externe des doigts 76 qui s'étendent parallèlement à l'axe de rotation et qui sont engagés dans des découpes ou échancrures 78 de la périphérie externe du voile annulaire 46, pour l'entraînement en rotation de la rondelle de frottement 66 par le voile annulaire 46 tout en autorisant un débattement angulaire limité entre le voile annulaire 46 et la rondelle de frottement 66 qui forme une rondelle tiroir ou une rondelle d'hystérésis selon la terminologie habituelle.

On retrouve en figure 4 les moyens qui viennent d'être décrits, et notamment les pions 72 du voile annulaire 46 qui servent au centrage et à l'entraînement en rotation de la rondelle d'appui 68 et de la rondelle élastique 70. Ces pions 72 sont destinés à s'engager entre des doigts radiaux 80 de la périphérie interne de la rondelle d'appui 68 et entre des doigts radiaux 82 de la périphérie interne de la rondelle élastique 70.

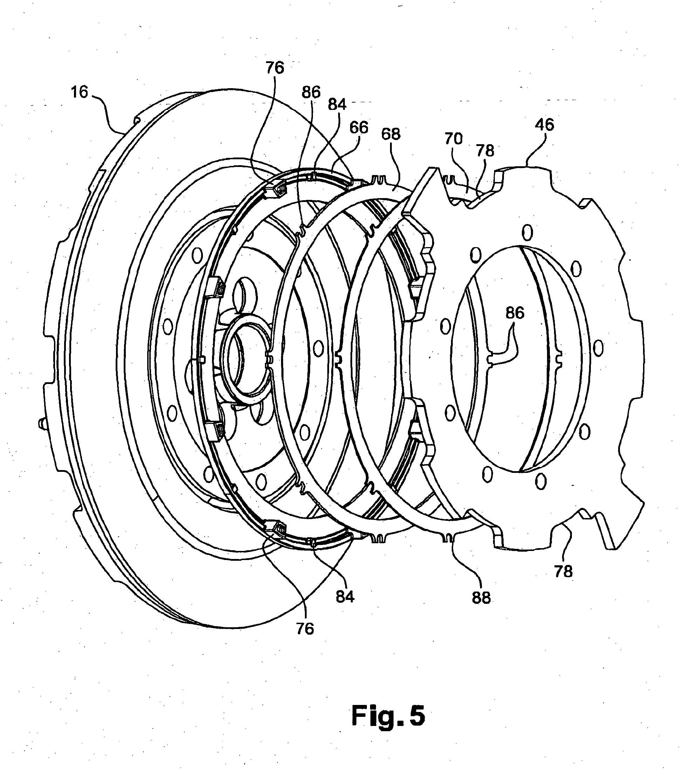

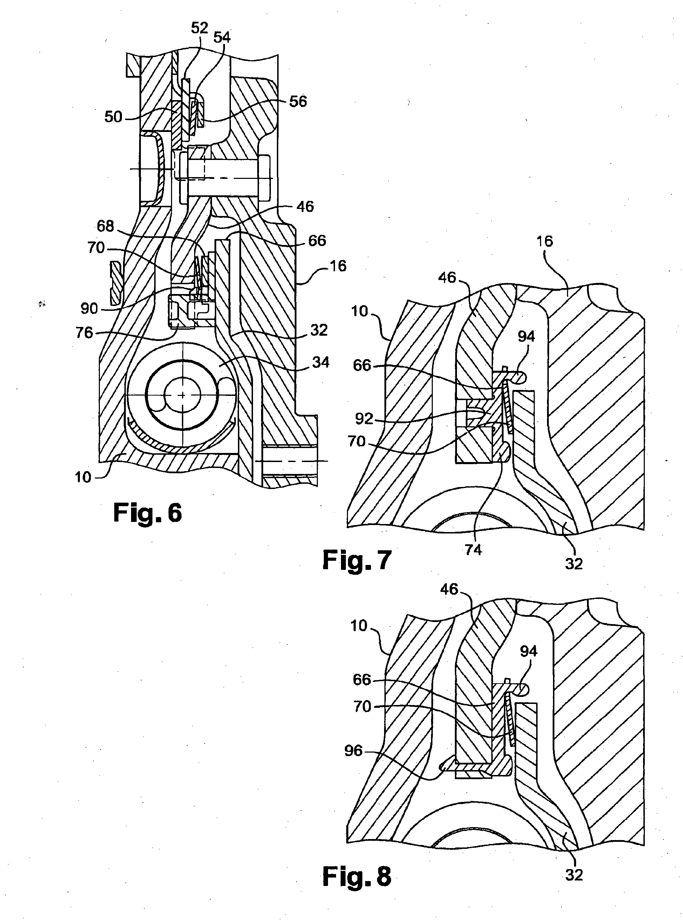

Dans la variante de réalisation des figures 5 et 6, les rondelles d'appui 68 et élastique 70 sont centrées et entraînées en rotation par la rondelle de frottement 66 qui comporte à cet effet des pions en saillie 84 parallèles à l'axe de rotation et destinés à s'engager entre des doigts radiaux 86, 88 formés sur la périphérie externe des rondelles d'appui 68 et élastique 70.

En outre, la rondelle de frottement 66 est formée avec des crochets 90 qui s'engagent élastiquement sur les périphéries externes des rondelles d'appui 68 et élastique 70 et qui maintiennent ces deux rondelles sur la rondelle de frottement 66, pour former un sous-ensemble.

Dans la variante de la figure 7, la rondelle de frottement 66 est fixée sur le voile annulaire 46 au moyen de pions 92 formés en saillie sur sa face radiale tournée vers la première masse d'inertie et engagés dans des orifices correspondants du voile annulaire 46.

Cette rondelle de frottement 66 comprend en périphérie extérieure un rebord annulaire 74 semblable à celui déjà décrit, pour limiter le basculement axial de la seconde masse d'inertie en fonctionnement.

En outre, la périphérie interne de la rondelle de frottement 66 comporte des pattes ou des doigts 94 parallèles à l'axe de rotation et qui s'étendent vers la seconde masse d'inertie 16 pour le support et le centrage de la rondelle élastique 70, celle-ci étant en appui d'une part sur la rondelle de frottement 66 et d'autre part sur le couvercle annulaire 32.

Une autre rondelle de frottement peut être interposée entre la rondelle élastique 70 et le couvercle annulaire 32, cette autre rondelle de frottement étant réalisée en matériau plastique pour éviter les frottements métal sur métal. Cette autre rondelle de frottement sera supportée et centrée par les pattes 94 de la rondelle 66, de la même façon que la rondelle élastique 70.

Dans la variante de réalisation de la figure 8, la rondelle 66 est fixée sur le voile annulaire 46 au moyen de pattes d'encliquetage 96 formées en saillie à sa périphérie extérieure et engagées sur la périphérie externe du voile annulaire 46.

Comme dans le mode de réalisation de la figure 7, une rondelle élastique 70 est montée entre la rondelle 66 et le couvercle annulaire 32 et est supportée et centrée sur la rondelle 66 au moyen de pattes 94 de la périphérie interne de la rondelle 66. Une autre rondelle de frottement peut être intercalée entre la rondelle élastique 70 et le couvercle annulaire 32 pour éviter les frottements métal sur métal, comme décrit ci-dessus.

Bien entendu, les ensembles de rondelles 66, 70 des figures 7 et 8 peuvent être montés sur le couvercle annulaire 32 au lieu de l'être sur le voile annulaire 46, le montage étant similaire à celui représenté dans les figures 7 et 8, la rondelle élastique étant en appui sur le voile annulaire 46.

On notera également que, comme représenté en figure 6, le double volant amortisseur selon l'invention peut comprendre d'autres moyens de frottement, tels que les moyens 50, 52, 54, 56 de la figure 1.

## Revendications

1. Double volant amortisseur, en particulier pour véhicule automobile, comprenant deux masses d'inertie coaxiales (10, 16), une seconde (16) des deux masses d'inertie étant centrée et guidée en rotation sur une première (10) des deux masses d'inertie au moyen d'un palier (18) du double volant amortisseur, un amortisseur de torsion (20) monté entre les deux masses d'inertie et comprenant des ressorts (34, 36) et des moyens de frottement pour l'absorption et l'amortissement des vibrations et des acyclismes de rotation, **caractérisé en ce que** les moyens de frottement comprennent au moins une rondelle élastique (70) et une rondelle de frottement (66) serrées axialement entre un couvercle annulaire (32) solidaire de la première masse d'inertie et la périphérie radialement externe de voile annulaire (46) solidaire de la seconde masse d'inertie et formant l'élément de sortie de l'amortisseur de torsion, la rondelle élastique (70) formant également un moyen d'amortissement du basculement axial de la seconde masse d'inertie (16) en fonctionnement.

2. Double volant amortisseur selon la revendication 1, **caractérisé en ce que** la rondelle de frottement (66) comporte un rebord annulaire (74) à sa périphérie externe, formant une butée de limitation du basculement axial de la seconde masse d'inertie (16).

3. Double volant amortisseur selon la revendication 1 ou 2 **caractérisé en ce que** les moyens de frottement comprennent également une rondelle d'appui (68), intercalée entre la rondelle élastique (70) et la rondelle de frottement (66).

4. Double volant amortisseur selon la revendication 3, **caractérisé en ce que** la rondelle élastique (70) et la rondelle d'appui (78) sont centrées sur des pions en saillie (72) du voile annulaire (46).

5. Double volant amortisseur selon la revendication 3, **caractérisé en ce que** la rondelle d'appui (68) et la rondelle élastique (70) sont solidaires en rotation du voile annulaire (46).

6. Double volant amortisseur selon la revendication 3, **caractérisé en ce que** la rondelle d'appui (68) et la rondelle élastique (70) sont solidaires en rotation de la rondelle de frottement (66).

7. Double volant amortisseur selon la revendication 6, **caractérisé en ce que** la rondelle de frottement (66), la rondelle d'appui (68) et la rondelle élastique (70) forment un sous-ensemble, dans lequel la rondelle d'appui et la rondelle élastique sont retenues sur la rondelle de frottement (66) par des crochets (90) de la rondelle de frottement (66).

8. Double volant amortisseur selon la revendication 1 ou 2, **caractérisé en ce que** la rondelle de frottement (66) est appliquée et fixée sur le voile annulaire (46) et la rondelle élastique (70) est en appui sur le couvercle annulaire (32), directement ou par l'intermédiaire d'une autre rondelle de frottement.

9. Double volant amortisseur selon la revendication 1 ou 2, **caractérisé en ce que** la rondelle de frottement (66) est appliquée et fixée sur le couvercle annulaire (32) et la rondelle élastique (70) est en appui sur le voile annulaire (46), directement ou par l'intermédiaire d'une autre rondelle de frottement.

10. Double volant amortisseur selon la revendication 8 ou 9, **caractérisé en ce que** la rondelle élastique (70) est accrochée sur la première rondelle de frottement (66) et forme un sous-ensemble avec celle-ci.

## Patentansprüche

1. Doppeldämpfungsschwungrad, insbesondere für ein Kraftfahrzeug, umfassend zwei koaxiale Schwungmassen (10, 16), eine zweite (16) der zwei Schwungmassen ist auf einer ersten (10) der zwei Schwungmassen (10, 16) mittels eines Lagers (18) des Doppeldämpfungsschwungrad zentriert und rotierend geführt, einen Torsionsdämpfer (20), der zwischen den beiden Schwungmassen montiert ist und Federn (34, 36) umfasst, und Reibungsmittel für die Absorption und die Dämpfung von Schwingungen und Drehungleichförmigkeiten, **dadurch gekennzeichnet, dass** die Reibungsmittel mindestens eine elastische Scheibe (70) und eine Reibscheibe (66) umfassen, die axial zwischen einer ringförmigen Abdeckung (32), die in das erste Schwungrad integriert ist, und dem radialen Außenumfang des ringförmigen Flansches (46) eingespannt sind, welcher mit der zweiten Schwungmasse fest verbunden ist und das Ausgangselement des Torsionsdämpfers bildet, wobei die elastische Scheibe (70) außerdem ein Mittel zur Dämpfung des beim Betrieb auftretenden axialen Kippens der zweiten Schwungmasse (16) bildet.

2. Doppeldämpfungsschwungrad nach Anspruch 1, **dadurch gekennzeichnet, dass** die Reibscheibe (66) an ihrem äußeren Umfang einen ringförmigen Rand (74) aufweist, der ein Widerlager zur Begrenzung des axialen Kippens der zweiten Schwungmasse (16) bildet.

3. Doppeldämpfungsschwungrad nach Anspruch 1 oder 2, **dadurch gekennzeichnet, dass** die Reibungsmittel außerdem eine Auflagescheibe (68) umfassen, die zwischen die elastische Scheibe (70) und die Reibscheibe (66) zwischengeschaltet ist.

4. Doppeldämpfungsschwungrad nach Anspruch 3, **dadurch gekennzeichnet, dass** die elastische Scheibe (70) und die Auflagescheibe (78) auf Steinen (72) zentriert sind, die von dem ringförmigen Flansch (46) vorspringen.

5. Doppeldämpfungsschwungrad nach Anspruch 3, **dadurch gekennzeichnet, dass** die Auflagescheibe (68) und die elastische Scheibe (70) drehfest mit dem ringförmigen Flansch (46) sind.

6. Doppeldämpfungsschwungrad nach Anspruch 3, **dadurch gekennzeichnet, dass** die Auflagescheibe (68) und die elastische Scheibe (70) drehfest mit der Reibscheibe (66) sind.

7. Doppeldämpfungsschwungrad nach Anspruch 6, **dadurch gekennzeichnet, dass** die Reibscheibe (66), die Auflagescheibe (68) und die elastische Scheibe (70) eine Unter-Baugruppe bilden, in welcher die Auflagescheibe und die elastische Scheibe auf der Reibscheibe (66) durch Haken (90) der Reibscheibe (66) zurückgehalten sind.

8. Doppeldämpfungsschwungrad nach Anspruch 1 oder 2, **dadurch gekennzeichnet, dass** die Reibscheibe (66) auf den ringförmigen Flansch (46) aufgebracht und befestigt ist, und dass die elastische Scheibe (70) direkt oder unter Zwischenschaltung einer anderen Reibscheibe in Auflage auf dem ringförmigen Deckel (32) ist.

9. Doppeldämpfungsschwungrad nach Anspruch 1 oder 2, **dadurch gekennzeichnet, dass** die Reibscheibe (66) auf den ringförmigen Deckel (32) aufgebracht und befestigt ist, und dass die elastische Scheibe (70) direkt oder unter Zwischenschaltung einer anderen Reibscheibe in Auflage auf dem ringförmigen Flansch (46) ist.

10. Doppeldämpfungsschwungrad nach Anspruch 8 oder 9, **dadurch gekennzeichnet, dass** die elastische Scheibe (70) an der ersten Reibscheibe (66) eingerastet ist und mit dieser eine Unter-Baugruppe bildet.

## Claims

1. Double damping flywheel, in particular for a motor vehicle, comprising two coaxial inertia masses (10, 16), a second (16) of the two inertia masses being centered and guided in rotation on a first (10) of the two inertia masses by means of a bearing (18) of the double damping flywheel, a torsion damper (20) which is fitted between the two inertia masses, and comprises springs (34, 36) and friction means for the absorption and damping of the vibrations and of the rotational irregularities, **characterised in that** the friction means comprise at least a resilient washer (70) and a friction washer (66) which are axially clamped between an annular cover (32) which is integral with the first inertia mass and the radially outer periphery of an annular flange (46) which is integral with the second inertia mass, and forms the output element of the torsion damper, the resilient washer (70) also forming a means for damping the axial tilting of the second inertia mass (16) in operation.

2. Double damping flywheel according to claim 1, **characterised in that** the friction washer (66) comprises an annular rim (74) on its outer periphery, which forms a stop for limitation of the axial tilting of the second inertia mass (16).

3. Double damping flywheel according to claim 1 or 2, **characterised in that** the friction means also comprise a support washer (68) which is interposed between the resilient washer (70) and the friction washer (66).

4. Double damping flywheel according to claim 3, **characterised in that** the resilient washer (70) and the support washer (78) are centred on projecting pins (72) of the annular flange (46).

5. Double damping flywheel according to claim 3, **characterised in that** the support washer (68) and the resilient washer (70) are integral in rotation with the annular flange (46).

6. Double damping flywheel according to claim 3, **characterised in that** the support washer (68) and the resilient washer (70) are integral in rotation with the friction washer (66).

7. Double damping flywheel according to claim 6, **characterised in that** the friction washer (66), the support washer (68) and the resilient washer (70) form a subassembly, wherein the support washer and the resilient washer are retained on the friction washer (66) by hooks (90) of the friction washer (66).

8. Double damping flywheel according to claim 1 or 2, **characterised in that** the friction washer (66) is applied and secured on the annular flange (46), and the resilient washer (70) is supported on the annular cover (32), directly or by means of another friction washer.

9. Double damping flywheel according to claim 1 or 2, **characterised in that** the friction washer (66) is applied and secured on the annular cover (32), and the resilient washer (70) is supported on the annular flange (46), directly or by means of another friction washer.

10. Double damping flywheel according to claim 8 or 9, **characterised in that** the resilient washer (70) is hooked on the first friction washer (66), and forms a subassembly with the latter.
